(19) Europäisches Patentamt / European Patent Office / Office européen des brevets

(11) EP 3 067 906 A1

(12) **EUROPEAN PATENT APPLICATION**
published in accordance with Art. 153(4) EPC

(43) Date of publication:
**14.09.2016 Bulletin 2016/37**

(21) Application number: **14860930.8**

(22) Date of filing: **17.06.2014**

(51) Int Cl.:
***H01G 9/20*** *(2006.01)* ***H01G 9/26*** *(2006.01)*

(86) International application number:
**PCT/JP2014/003256**

(87) International publication number:
**WO 2015/068317 (14.05.2015 Gazette 2015/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **08.11.2013 JP 2013231968**

(71) Applicant: **Panasonic Corporation**
**Kadoma-shi, Osaka 571-8501 (JP)**

(72) Inventor: **SUZUKA, Michio**
**Osaka-shi, Osaka 540-6207 (JP)**

(74) Representative: **Grünecker Patent- und Rechtsanwälte**
**PartG mbB**
**Leopoldstraße 4**
**80802 München (DE)**

# (54) ELECTROCHEMICAL DEVICE

(57) An electrochemical device **(100)** according to an embodiment of the present disclosure includes: a first substrate **(12)**; a second substrate **(52)** arranged so that a gap is formed between the first substrate and the second substrate; an electrolytic medium **(24)** including an electrolyte solution filling the gap; a sealing portion **(46)** formed between the first substrate and the second substrate for sealing the electrolytic medium **(24)** in the gap; and a first electrode **(15)**, a second electrode **(35)** and a third electrode **(55)** being in contact with the electrolytic medium **(24)** and each having an electrochemically different function, wherein at least a portion of each of the first electrode **(15)**, the second electrode **(35)** and the third electrode **(55)** is formed on the first substrate **(12)** or on the second substrate **(52)**.

FIG.1

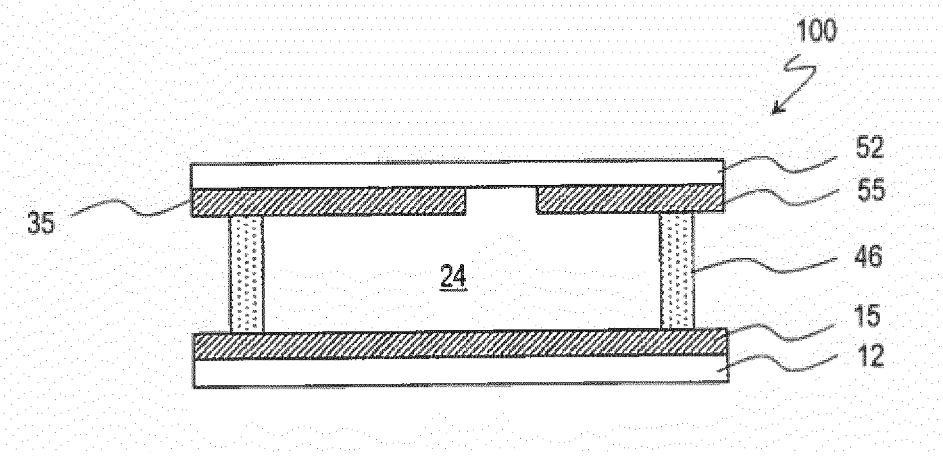


EP 3 067 906 A1

**Description**

## TECHNICAL FIELD

The present disclosure relates to an electrochemical device and, for example, relates to an electrochemical device that can suitably be used as a dye-sensitized power generation element capable of generating power even under an environment where the illuminance is relatively low, e.g., inside a room.

## BACKGROUND ART

In recent years, dye-sensitized solar cells using dyes as photosensitizers have been under research and development. A conventional dye-sensitized solar cell typically includes a photoanode including a dye, a counter electrode, an electron transport layer and a hole transport layer provided between the photoanode and the counter electrode, and an electrolyte solution including a redox couple. There is a demand for improving the characteristics of each component in order to improve the characteristics of the dye-sensitized solar cell.

Patent Document No. 1 discloses an energy storage-type dye-sensitized solar cell having an electricity storing function. The energy storage-type dye-sensitized solar cell described in Patent Document No. 1 includes a cell portion including a photoelectrode and a counter electrode arranged in a first electrolyte solution, and a battery portion partitioned from the cell portion with a cation exchange membrane and including a charge storage electrode arranged in a second electrolyte solution. The second electrolyte solution has the same cationic species as the first electrolyte solution and a different anionic species from the first electrolyte solution. The first electrolyte solution includes an oxidation-reduction substance (I-/I3-), and the cation exchange membrane is provided so as to prevent the oxidation-reduction substance from moving into the second electrolyte solution.

## CITATION LIST

### PATENT LITERATURE

[Patent Document No. 1] Japanese Laid-Open Patent Publication No. 2006-172758

## SUMMARY OF INVENTION

### TECHNICAL PROBLEM

The energy storage-type dye-sensitized solar cell disclosed in Patent Document No. 1 is a so-called beaker cell-type electrochemical device having three electrodes (the photoelectrode, the counter electrode and the charge storage electrode). With a beaker cell-type electrochemical device, electrodes can easily be taken out even if there are three or more electrodes, but it is difficult to stably hold the electrolyte solution over a long time. Another problem is that it is difficult to reduce the size of the electrochemical device, and it is less suitable for mass production. Note that the problem is not unique to the use of an electrolyte solution, but similar problems occur also when using a gel electrolyte comprising an electrolyte solution therein.

Therefore, an object of the present disclosure is to at least provide an electrochemical device having a novel structure, with which it is possible to improve the preservation stability of an electrolytic medium in an electrochemical device having three or more electrodes having electrochemically different functions.

### SOLUTION TO PROBLEM

An electrochemical device according to an embodiment of the present disclosure includes: a first substrate; a second substrate arranged so that a gap is formed between the first substrate and the second substrate; an electrolytic medium filling the gap; a sealing portion formed between the first substrate and the second substrate for sealing the electrolytic solution in the gap; and a first, a second and a third electrode being in contact with the electrolytic medium and each having an electrochemically different function, wherein at least a portion of each of the first, second and third electrodes is formed on the first substrate or on the second substrate.

### ADVANTAGEOUS EFFECTS OF INVENTION

According to an embodiment of the present disclosure, an electrochemical device having a novel structure is provided, with which it is possible to improve the preservation stability of an electrolytic medium in an electrochemical

device having three or more electrodes having electrochemically different functions.

## BRIEF DESCRIPTION OF DRAWINGS

[FIG. **1**] A schematic cross-sectional view showing an electrochemical device **100** according to an embodiment of the present invention.
[FIG. **2**] A schematic cross-sectional view showing a photoelectric conversion element **200A** according to the embodiment of the present invention.
[FIG. **3**] A schematic cross-sectional view showing another photoelectric conversion element **200B** according to the embodiment of the present invention.
[FIG. **4**] A schematic cross-sectional view showing another photoelectric conversion element **200C** according to the embodiment of the present invention.
[FIG. **5**] A schematic cross-sectional view showing an electrochemical device **300** according to another embodiment of the present invention.
[FIG. **6**] A graph showing the retention of an electrolyte solution of a photoelectric conversion element for an example of the invention and that for a reference example.

## DESCRIPTION OF EMBODIMENTS

The present disclosure includes electrochemical devices as defined in the following items.

[Item 1] An electrochemical device including:

a first substrate;
a second substrate arranged so that a gap is formed between the first substrate and the second substrate;
an electrolytic medium including an electrolyte solution filling the gap;
a sealing portion formed between the first substrate and the second substrate for sealing the electrolytic medium in the gap; and
a first, a second and a third electrode being in contact with the electrolytic medium and each having an electrochemically different function,
wherein at least a portion of each of the first, second and third electrodes is formed on the first substrate or on the second substrate.

[Item 2] The electrochemical device according to item 1, wherein at least a portion of each of two of the first, second and third electrodes is formed on the first substrate, while at least a portion of the remaining one of the first, second and third electrodes is formed on the second substrate.
[Item 3] The electrochemical device according to item 1 or 2, wherein the first electrode includes a first conductive layer and a semiconductor layer formed on the first conductive layer, and the semiconductor layer is formed so that the first conductive layer is not in direct contact with the electrolytic medium.
[Item 4] The electrochemical device according to item 3, wherein the first electrode is formed on the first substrate, and there is an area on the first substrate where the first conductive layer is absent and only the semiconductor layer is present, as seen from a direction normal to the first substrate.
[Item 5] The electrochemical device according to item 3 or 4, wherein the first electrode is a photoanode, the second electrode is a counter electrode, and the third electrode is a charge storage electrode.
[Item 6] The electrochemical device according to item 5, wherein:

the first electrode is formed on the first substrate; and
the second electrode and the third electrode are formed on the second substrate.

[Item 7] The electrochemical device according to item 5, wherein:

the first electrode and at least a portion of the second electrode are formed on the first substrate; and
the third electrode is formed on the second substrate.

[Item 8] The electrochemical device according to any one of items 5 to 7, further including a solid compound layer arranged between the first electrode and the second electrode, wherein the solid compound layer includes the

electrolytic medium.

[Item 9] The electrochemical device according to item 8, further including a separator between the solid compound layer and the third electrode.

[Item 10] The electrochemical device according to any one of items 5 to 9, wherein the semiconductor layer includes a non-porous semiconductor layer formed on a side of the conductive layer and a porous semiconductor layer formed on the non-porous semiconductor layer, and the porous semiconductor layer includes a sensitizing dye.

[Item 11] The electrochemical device according to any one of items 5 to 9, wherein the photoanode includes a perovskite compound.

An embodiment of the present disclosure will now be described with reference to the drawings.

FIG. 1 shows a schematic cross-sectional view of the electrochemical device **100** according to an embodiment of the present invention.

The electrochemical device 100 includes a first substrate **12,** a second substrate **52** arranged so that a gap is formed between the first substrate **12** and the second substrate **52,** an electrolytic medium **24** including an electrolyte solution filling the gap, a sealing portion **46** formed between the first substrate **12** and the second substrate **52** for sealing the electrolytic medium **24** in the gap, and a first electrode **15,** a second electrode **35** and a third electrode **55** being in contact with the electrolytic medium **24** and each having an electrochemically different function, wherein the first electrode **15** is formed on the first substrate **12** and the second electrode **35** and the third electrode **55** are formed on the second substrate **52.** The arrangement of the three electrodes is not limited to this example, but at least a portion of each of two of the first electrode **15,** the second electrode **35** and the third electrode **55** may be formed on the first substrate **12,** while at least a portion of the remaining one of the first electrode **15,** the second electrode **35** and the third electrode **55** is formed on the second substrate **52,** a specific configuration of which will later be illustrated. Moreover, at least a portion of each of the first electrode **15,** the second electrode **35** and the third electrode 55 may be formed on the first substrate **12** or on the second substrate **52.** For example, using a sealant containing conductive particles, the first electrode 15 formed on the first substrate **12** can be electrically connected to an electrode on the second substrate (which is insulated from the other electrode on the second substrate). Such a sealant may be one of those commercially available as an anisotropic conductive material (an anisotropic conductive film (ACF) or an anisotropic conductive paste (ACP)). An anisotropic conductive material is an insulative resin with conductive particles dispersed therein, and is conductive only in the thickness direction. Needless to say, the sealing portion may be formed using an insulative sealant, and the first electrode **15** formed on the first substrate **12** may be electrically connected to an electrode on the second substrate by using a copper wire outside the sealing portion.

Needless to say, the electrochemical device according to the embodiment of the present invention may have four or more electrodes, wherein a portion of any of the electrodes is formed on the first substrate **12** or the second substrate **52.** "A portion of an electrode being formed on a substrate" means that the entire electrode does not need to be formed on the substrate, as long as at least a portion of the electrode is formed on the substrate, and the remaining portion of the electrode may extend in the electrolytic medium **24.** The portion of the electrode formed on the substrate extends to the outside of the sealing portion **46,** for example, as illustrated in FIG. **1,** and is electrically connected to an external circuit.

A portion of an electrode "being formed on a substrate" means that the portion of the electrode is in direct or indirect contact with the surface of the substrate, without the electrolytic medium **24** being interposed therebetween. Cases include not only those where it is formed directly on the surface of a glass substrate, for example, but also those where it is formed on the surface of an insulating film (e.g., an inorganic insulating film such as a silicon dioxide film), which is formed on the surface of a glass substrate.

The sealing portion **46** is formed by using a known sealant. The sealant is typically a resin or a glass. The resin may be a thermosetting resin, a photo-curable resin or a thermoplastic resin (heat-sealing resin). The sealant is typically insulative. Note however that as described above, where the first electrode **15** formed on the first substrate **12** is electrically connected to an electrode on the second substrate (which is insulated from the other electrode), for example, an anisotropic conductive material may be used.

As shown in FIG. 1, since the sealing portion **46** is formed so as to be in contact with the first electrode **15,** the second electrode **35** and the third electrode **55,** which are formed on the first substrate **12** or on the second substrate **52,** the electrolytic medium **24** can be sealed reliably, thus achieving a high preservation stability of the electrolytic medium **24.** For example, if an electrode is extended from where it is not on the substrate to the outside through the sealing portion, the area of the interface across which the electrode and the sealing portion are in contact with each other increases, and the electrolyte solution may possibly leak through the interface. In contrast, as illustrated with the electrochemical device **100** according to the embodiment of the present invention, at least a portion of each of three or more electrodes is formed on a substrate, and each electrode is extended to the outside from a portion thereof on the substrate, thereby effectively suppressing/preventing the electrolyte solution from leaking. Note that an insulating layer (e.g., an inorganic insulating film such as a silicon dioxide film) covering the surface of each electrode, and the sealing

portion may be formed so as to be in contact with the insulating layer.

The first substrate **12** and the second substrate 52 are typically an insulator substrate. The shape of the first substrate **12** and the second substrate **52** is typically a plate shape, but it is not limited thereto. Specifically, an insulative substrate such as a glass substrate, a plastic substrate or an aluminum oxide substrate may be used. Since a plurality of electrodes having electrochemically different functions are formed on the same substrate, it is preferred that at least the surface of the first substrate **12** and the second substrate **52** is insulative. Needless to say, a metal substrate or a semiconductor substrate with an insulating film formed on the surface thereof may be used. Note however that where it is used in a photoelectric conversion element or an electrochromic element to be described later, light-transmissive insulating substrate is used as necessary.

The three or more electrodes formed on the insulative surface of the first substrate 12 and the second substrate 52 are each formed by using a known conductive material. Electrodes formed on an insulative surface will be electrically insulated from each other as long as they are separated from each other. Electrodes separated from each other may be formed by using a mask deposition method, for example, or a conductive film formed on the entire surface may be divided into a plurality of electrodes throuqh etching using a photolithography process, or the like. Electrodes may be formed by a metal layer, or may be an oxide conductive layer (transparent conductive layer), or may include these layered together. The material and method for forming electrodes are well known to those skilled in the art.

Next, referring to FIG. 2 to FIG. **4,** a photoelectric conversion element according to the embodiment of the present invention will be described. In the illustrated photoelectric conversion element, the first electrode is a photoanode, the second electrode is a counter electrode, and the third electrode is a charge storage electrode. Those components having substantially the same functions are denoted by the same reference signs, and the description thereof may be omitted.

FIG. **2** shows a schematic cross-sectional view of the photoelectric conversion element **200A** of the embodiment.

The photoelectric conversion element **200A** includes a photoanode **15A** formed on the first substrate **12,** a counter electrode **35A** formed on the second substrate **52,** a solid compound layer **22** arranged between the photoanode **15A** and the counter electrode **35A,** a charge storage electrode **55A** formed on the second substrate **52** while being spaced apart from the counter electrode **35A,** and the electrolytic medium **24** included in the solid compound layer **22** and filling the gap between the counter electrode **35A** and the charge storage electrode **55A.** The electrolytic medium **24** is typically an electrolyte solution, and may be referred to hereinafter as the electrolyte solution **24.** A separator **42** is provided in the gap between the solid compound layer **22** and the charge storage electrode **55A** for preventing them from coming into direct contact with each other. While the separator **42** is optional, the provision thereof is preferred for reducing the size and the thickness of the photoelectric conversion element **200A.** The separator **42** may be a porous plastic film or a plastic nonwoven fabric, for example.

The photoelectric conversion element **200A** forms a photovoltaic element between the photoanode **15A** and the counter electrode **35A,** forming a storage battery between the counter electrode **35A** and the charge storage electrode **55A.** As illustrated herein, when the photoanode **15A** has the semiconductor layer **16b** including a photosensitizer, a dye-sensitized solar cell is formed between the photoanode **15A** and the counter electrode **35A**, for example.

In the photoelectric conversion element **200A,** when charged, the photoanode **15A** and the charge storage electrode **55A** are electrically connected together via a switch SW (not shown), for example. On the other hand, when discharged, a load is connected to the counter electrode **35A** and the charge storage electrode **55A.** Then, the photoanode **15A** and the charge storage electrode **55A** may be electrically disconnected from each other, or the photoanode **15A** and the charge storage electrode **55A** may be in constant electric connection with each other.

The photoanode **15A** includes, for example, a conductive layer (which may be referred to also as a "transparent conductive layer") **14** transmitting visible light therethrough, and a semiconductor layer **16** formed on the conductive layer **14.** The semiconductor layer **16** includes a non-porous semiconductor layer **16a** formed on the conductive layer 14 side and a porous semiconductor layer **16b** formed on the non-porous semiconductor layer **16a,** and the porous semiconductor layer **16b** includes a photosensitizer. The porous semiconductor layer **16b** includes a porous semiconductor (e.g., a porous titanium oxide), and a photosensitizer supported on the surface of the porous semiconductor. Note that the embodiment of the present invention is described herein with an emphasis on a photosensitizer absorbing at least visible light, it is needless to say that the photosensitizer may further absorb light of any other wavelength region (e.g., near infrared light).

The semiconductor layer **16** is preferably formed so that the conductive layer **14** does not come into direct contact with the electrolyte solution **24.** Since the porous semiconductor layer **16b** forming the semiconductor layer **16** allows the electrolyte solution **24** to pass therethrough, a surface of the conductive layer **14** on the electrolyte solution **24** side is preferably completely covered with the non-porous semiconductor layer **16a,** as shown in FIG. **2.**

When the conductive layer **14** comes into direct contact with the electrolyte solution **24,** if the conductive layer **14** and the electrolyte solution have different oxidation-reduction potentials, there is produced a leak current. By forming the semiconductor layer **16** so that the conductive layer **14** does not come into direct contact with the electrolyte solution **24,** it is possible to form a Schottky junction, thereby giving a rectifying effect, between the conductive layer **14** and the

electrolyte solution **24.** Thus, it is possible to prevent a leak between the conductive layer **14** and the electrolyte solution **24.** By forming the conductive layer **14** so as to be covered with the non-porous semiconductor layer **16a,** it is possible to more reliably prevent a leak between the conductive layer **14** and the electrolyte solution **24.**

The solid compound layer **22** typically has a structure where the electrolyte solution **24** is included therein. The solid compound layer **22** is provided so as to be in direct contact with the photoanode **15A** and the counter electrode **35A,** for example. The solid compound layer **22** transports holes produced at the photoanode **15A** to the counter electrode **35A.** The solid compound layer **22** includes a polymer gel layer including a polymer having an oxidation-reduction part (e.g., a stable radical such as a nitroxyl radical), for example. Alternatively, the solid compound layer **22** includes a porous medium or an intercalatable solid (e.g., lithium cobalt oxide). Where the solid compound layer **22** includes a porous medium or an intercalatable solid, the solid compound layer **22** further includes a conductive carbon, for example. The solid compound layer **22** has the function of an oxidation-reduction substance, while having the function of fixing or holding an oxidation-reduction substance. Therefore, by using the solid compound layer **22,** the cation exchange membrane described in Patent Document No. 1 can be omitted.

Note that a polymer gel layer is advantageous in that the contact area between the photoanode **15A** and the counter electrode **35A** can be increased. A polymer preferably does not substantially include molecules of which the molecular weight is less than 1000, for example. It is possible to suppress the low-molecular-weight component having an oxidation-reduction part from eluting in the electrolyte solution **24** to be reduced at a charge storage electrode **55.** A polymer preferably has a cross-linked structure, and the cross-linked structure is preferably a chemical cross-linked structure. This is because a chemical cross-linked structure has a higher stability than a physical cross-linked structure that is formed by polymer chains being tangled with each other. A polymer gel layer preferably further includes a conductive aid. A polymer gel having a stable radical as an oxidation-reduction part is conductive in an electrolyte solution, but the internal resistance can be further reduced by mixing therein a conductive aid (e.g., a vapor-grown carbon fiber).

The counter electrode **35A** functions as a positive electrode of a photoelectric conversion element, and may be formed by a conductive layer **34** that transmits visible light therethrough, and a metal layer **36** formed on the conductive layer **34,** for example. The material of the transparent conductive layer **34** is fluorine-doped $SnO_2$, for example, and the material of the metal layer **36** is platinum, for example.

The electrolyte solution **24** includes a supporting electrolyte and a solvent. The electrolyte solution **24** preferably does not include an oxidation-reduction substance, and the oxidation-reduction substance included in the electrolyte solution **24** is 10 mM at maximum, for example. The hole transportation is preferably done exclusively by the solid compound layer **22.** The electrolyte solution **24** is in contact with the photoanode **15A,** the counter electrode **35A** and the charge storage electrode **55A.** The electrolyte solution **24** is sealed by the sealing portion **46** between the first substrate **12** and the second substrate **52.**

The charge storage electrode **55A** includes, for example, an oxide conductive layer **54** formed on the substrate **52,** a metal layer **56** formed on the oxide conductive layer **54,** and a charge storage layer **58** formed on the metal layer **56.** The charge storage layer **58** may be formed from a mixture of tungsten oxide and conductive carbon, for example. The charge storage layer **58** is in contact with the electrolyte solution **24.** The substrate **52** is, for example, a glass substrate or a plastic substrate (including a plastic film) that transmits visible light therethrough.

Materials used for forming the above-described components of the photoelectric conversion element **200A** will be described later in detail.

A basic operation of the photoelectric conversion element **200A** will be described.

When the photoanode **15A** is irradiated with light of a predetermined wavelength range, the photosensitizer absorbs visible light to be excited, generating electron-hole pairs. Electrons are injected into the conduction band of the semiconductor layer **16,** and are transported to the conductive layer **14.** Holes are guided to the counter electrode **35A** via the solid compound layer **22,** and the photosensitizer is reduced. Thus, the solid compound layer **22** functions as an oxidation-reduction substance. In other words, a solid compound that functions as an oxidation-reduction substance can be used as the solid compound layer **22.** Where the photoanode **15A** and the charge storage electrode **55A** are electrically connected together, electricity is photovoltaically generated and stored. The oxidation-reduction substance is fixed or held by the solid compound layer **22,** thereby suppressing self-discharge.

On the other hand, by connecting a load to the counter electrode **35A** and the charge storage electrode **55A,** it is possible to take out the charge stored. In this process, the photoanode **15A** and the charge storage electrode **55A** may be electrically disconnected from each other, or the photoanode **15A** and the charge storage electrode **55A** may be electrically connected together.

Next, other photoelectric conversion elements **200B** and **200C,** which are electrochemically equivalent to the photoelectric conversion element **200A,** will be described.

FIG. **3** shows a schematic cross-sectional view of the photoelectric conversion element **200B.** In the photoelectric conversion element **200B,** a photoanode 15B and a counter electrode **35B** are formed on the substrate **12,** and a charge storage electrode **55A** is formed on the substrate **52.**

As described above, the semiconductor layer **16** is preferably formed so that the conductive layer **14** is not in

direct contact with the electrolyte solution **24.** Where an edge of the conductive layer **14** may possibly come into direct contact with the electrolyte solution **24** (where an edge of the conductive layer **14** is present in the space surrounded by the sealing portion **46**) as in the photoelectric conversion element **200B,** it is preferred that there is an area on the substrate **12** where only the semiconductor layer **16** is present and the conductive layer **14** is absent, as seen from the direction normal to the substrate **12,** as shown in FIG. **3.** Since the porous semiconductor layer **16b** of the semiconductor layer **16** allows the electrolyte solution **24** to pass therethrough, it is preferred that there is an area on the substrate **12** where the conductive layer **14** is absent and only the non-porous semiconductor layer **16a** is present, as seen from the direction normal to the substrate **12.** That is, it is preferred that not only the surface of the conductive layer **14** but also the side surface of the edge thereof is covered with the non-porous semiconductor layer **16a**.

FIG. **4** shows a schematic cross-sectional view of the photoelectric conversion element **200C.** In the photoelectric conversion element **200C,** a photoanode **15C** and a portion of a counter electrode **35C** are formed on the substrate **12,** and a charge storage electrode **55C** is formed on the substrate **52.** Since the distance from the counter electrode 35C to the photoanode 15C and the charge storage electrode 55C in the photoelectric conversion element 200C can be made smaller than the distance from the counter electrode **35B** to the photoanode **15B** and the charge storage electrode **55B** in the photoelectric conversion element **200B**, the internal resistance of the photoelectric conversion element **200C** can be made smaller than the internal resistance of the photoelectric conversion element **200B.** Note that the counter electrode **35C** of the photoelectric conversion element **200C** is different from the counter electrode **35B** of the photoelectric conversion element **200B** in that it has through holes allowing the electrolyte solution **24** to pass therethrough.

Also in the photoelectric conversion element **200C,** it is preferred that the semiconductor layer **16** is formed so that the conductive layer **14** is not in direct contact with the electrolyte solution **24,** and it is preferred that there is an area on the substrate **12** where the conductive layer **14** is absent and only the non-porous semiconductor layer **16a** is present.

Materials used for forming the components of the photoelectric conversion elements **200A, 200B** and **200C** will now be described. Although the following description is directed to the components of the photoelectric conversion element **200A,** it can be used for the formation of the corresponding components of the photoelectric conversion elements **200B** and **200C,** unless otherwise noted.

<Photoanode>

As described above, the photoanode **15A** (as do the photoanodes **15B** and **15C**) includes the conductive layer **14** that transmits visible light therethrough, and the semiconductor layer **16** formed on the conductive layer **14,** and the semiconductor layer **16** includes a photosensitizer, for example. The semiconductor layer **16** including a photosensitizer may be referred to as a light-absorbing layer. In this case, the substrate **12** is a glass substrate or a plastic substrate (including a plastic film) that transmits visible light therethrough, for example.

The conductive layer **14** that transmits visible light therethrough can be formed by a material that transmits visible light therethrough (hereinafter referred to as "transparent conductive material"), for example. The transparent conductive material may be a conductive metal oxide, for example. The metal oxide is, for example, an indium-tin complex oxide, an antimony-doped tin oxide, a fluorine-doped tin oxide, or a complex thereof. The conductive layer **14** that transmits visible light therethrough can also be formed by using a conductive material that does not transmit light therethrough. For example, it can be a metal layer having a pattern that is linear-shaped (stripe-shaped), wave-shaped, lattice-shaped (mesh-shaped) or punching metal-shaped (referring to a regular or irregular arrangement of many minute through holes), or a metal layer having a pattern that is a positive/negative-inverted version thereof. With these metal layers, light can pass through portions where a metal is absent. The metal may be, for example, platinum, gold, silver, copper, aluminum, rhodium, indium, titanium, iron, nickel, tin, zinc, or an alloy containing any of these. Moreover, a conductive carbon material may be used instead of a metal.

The transmittance of the conductive layer **14** that transmits visible light therethrough is 50% or more, and preferably 80% or more. The wavelength of light to be transmitted is dependent on the absorption wavelength of the photosensitizer. Then, the thickness of the conductive layer **14** is in the range of 1 nm to 100 nm, for example.

Where light is allowed to enter the semiconductor layer **16** from the opposite side from the substrate **12,** the substrate 12 and the conductive layer **14** do not need to transmit visible light therethrough. Therefore, where the conductive layer **14** is formed by using such a metal or carbon as described above, there is no need to form an area where the metal or carbon is absent, and if these materials have a sufficient strength, the conductive layer **14** may serve also as the substrate **12.**

Note that in order to prevent electrons from leaking at the surface of the conductive layer **14,** i.e., in order to provide a rectifying effect between the conductive layer **14** and the semiconductor layer **16,** an oxide layer of silicon oxide, tin oxide, titanium oxide, zirconium oxide, aluminum oxide, or the like, may be formed between the conductive layer **14** and the semiconductor layer **16.**

As described above, the semiconductor layer **16** includes the non-porous semiconductor layer **16a** formed on

the conductive layer **14** side, and the porous semiconductor layer **16b** formed on the non-porous semiconductor layer **16a,** and the porous semiconductor layer **16b** preferably includes a photosensitizer. The porous semiconductor layer **16b** having a photosensitizer includes a porous semiconductor, and a photosensitizer supported on the surface of the porous semiconductor, and the porous semiconductor is, for example, porous titanium oxide ($TiO_2$). Titanium oxide is characterized in that it has a photoelectric conversion property and it is unlikely to be photodissolved into the electrolyte solution. A porous medium has a large specific surface area, and is advantageous in that a large amount of photosensitizer can be supported and that the contact area between the solid compound layer **22** and the electrolyte solution **24** can be made large as will be described later. Needless to say, the semiconductor layer 16 may be formed by aggregated semiconductor particles, for example, instead of a porous medium. Note that the non-porous semiconductor layer **16a** is a non-porous titanium oxide layer, for example. The thickness of the non-porous semiconductor layer **16a** is 1 nm or more and 100 nm or less, for example. If the thickness of the non-porous semiconductor layer **16a** is less than 1 nm, the generation of a leak current may not be suppressed sufficiently, and if it is more than 100 nm, the electric resistance may be high, thereby lowering the photocurrent.

The thickness of the semiconductor layer **16** is 0.01 $\mu$m or more and 100 $\mu$m or less, for example. The thickness of the semiconductor layer **16** is preferably 0.5 $\mu$m or more and 50 $\mu$m or less, and more preferably 1 $\mu$m or more and 20 $\mu$m or less, though it may be changed as necessary in view of the photoelectric conversion efficiency. The semiconductor layer **16** preferably has a large surface roughness, and the surface roughness coefficient, given as effective area/projected area, is preferably 10 or more, and more preferably 100 or more. Note that the effective area refers to the effective surface area calculated from the volume (which is calculated from the projected area and the thickness of the semiconductor layer **16**) and the specific surface area and the bulk density of the material of the semiconductor layer **16.**

Other than $TiO_2$, the semiconductor layer **16** may be formed by using inorganic semiconductors below. For example, it may be an oxide of a metal element such as Cd, Zn, In, Pb, Mo, W, Sb, Bi, Cu, Hg, Ti, Ag, Mn, Fe, V, Sn, Zr, Sr, Ga, Si or Cr, a perovskite such as $SrTiO_3$ or $CaTiO_3$, a sulfide such as CdS, ZnS, $In_2S_3$, PbS, $Mo_2S$, $WS_2$, $Sb_2S_3$, $Bi_2S_3$, $ZnCdS_2$ or $Cu_2S$, or a metal chalcogenide such as CdSe, $In_2Se3$, $WSe_2$, HgS, PbSe or CdTe, and it may also be GaAs, Si, Se, $Cd_2P_3$, $Zn_2P_3$, InP, AgBr, $PbI_2$, $HgI_2$ or $BiI_3$. Among others, CdS, ZnS, $In_2S_3$, PbS, $Mo_2S$ $WS_2$, $Sb_2S_3$, $Bi_2S_3$, $ZnCdS_2$, $Cu_2S$, InP, $Cu_2O$, CuO and CdSe are advantageous in that they are capable of absorbing light whose wavelength is about 350 nm to about 1300 nm. Moreover, it may also be a complex including at least one or more selected from the group of semiconductors listed above, e.g., CdS/$TiO_2$, CdS/AgI, $Ag_2S$/AgI, CdS/ZnO, CdS/HgS, CdS/PbS, ZnO/ZnS, ZnO/ZnSe, CdS/HgS, CdSx/CdSe1-x, CdSx/Te1-x, CdSex/Te1-x, ZnS/CdSe, ZnSe/CdSe, CdS/ZnS, $TiO_2$/$Cd_3P_3$, CdS/CdSeCdyZn1-yS or CdS/HgS/CdS. Moreover, it may also be an organic semiconductor such as polyphenylenevinylene, polythiophene, polyacetylene, tetracene, pentacene or phthalocyanine.

The semiconductor layer **16** may be formed by any of various methods known in the art. Where an inorganic semiconductor is used, for example, a mixture of a powder of a semiconductor material and an organic binder (including an organic solvent) is applied on the conductive layer **14** and is subjected to a heating treatment, and the organic binder is removed, thereby obtaining the semiconductor layer **16** of the inorganic semiconductor. The method for applying the mixture may be any of various coating methods or any of various printing methods known in the art. The coating method may be, for example, a doctor blade method, a bar coating method, a spray method, a dip coating method or a spin coating method, and the printing method may be a screen printing method. A film of the mixture may be pressurized as necessary.

Where an organic semiconductor is used, the semiconductor layer **16** may be formed by any of various methods known in the art. A solution of an organic semiconductor may be applied on the conductive layer **14** by using any of various coating methods or any of various printing methods known in the art. Where a polymer semiconductor of which the number-average molecular weight is 1000 or more is used, for example, it may be a coating method such as a spin coating method or a drop casting method, or a printing method such as a screen printing or a gravure printing. Other than these wet processes, dry processes such as sputtering methods and vapor deposition methods may also be employed.

The photosensitizer may be, for example, a semiconductor ultrafine particle, a dye or a pigment. It may be an inorganic material, an organic material, or a mixture thereof. In order to efficiently absorb light and separate electric charge, a dye is preferred, including a 9-phenylxanthene-based dye, a coumarin-based dye, an acridine-based dye, a triphenylmethane-based dye, a tetraphenylmethane-based dye, a quinone-based dye, an azo-based dye, an indigo-based dye, a cyanine dye, a merocyanine-based dye, a xanthene-based dye, and the like. Alternatively, it may be a $RuL_2(H_2O)_2$-type ruthenium-cis-diagua-bipyridyl complex (L herein denotes 4,4'-dicarboxy-2,2'-bipyridine), or a type of a transition metal complex such as ruthenium-tris ($RuL_3$), ruthenium-bis ($RuL_2$), osmium-tris ($OsL_3$) or osmium-bis ($OsL_2$), or may be zinc-tetra(4-carboxyphenyl)porphyrin, an iron-hexacyanide complex, phthalocyanine, or the like. Otherwise, for example, those dyes mentioned in the chapter for DSSC in "Latest technology and material development for FPD, DSSC, Optical Memory and Functional Dyes" (NTS Inc.) may also be used. Associative dyes, among others, closely aggregate together to cover the surface of the semiconductor, and they may function as an insulator layer. If a photosensitizer functions as an insulator layer, it is possible to provide a rectifying effect at the charge separation interface (the interface between the photosensitizer and the semiconductor), suppressing recombination of charge after charge separation.

A preferred associative dye is a dye molecule having a structure shown in the chemical formula of [Formula 1], an example of which is a dye molecule having a structure shown in the chemical formula of [Formula 2], for example. Note that whether dye molecules have formed an aggregate can easily be determined by comparing the absorption spectrum of dye molecules dissolved in an organic solvent, or the like, with the absorption spectrum of dye molecules supported on a semiconductor.

[Formula 1]

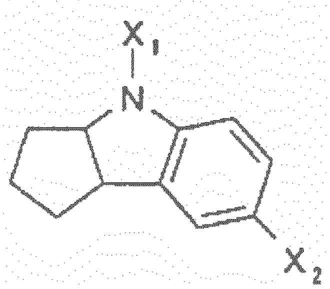

(where $X_1$ and $X_2$ independently includes at least one group selected from the group consisting of an alkyl group, an alkenyl group, an aralkyl group, an aryl group and a hetero ring, and the at least one group may independently include a substituent. $X_2$ has a carboxyl group, a sulfonyl group or a phosphonyl group, for example.)

[Formula 2]

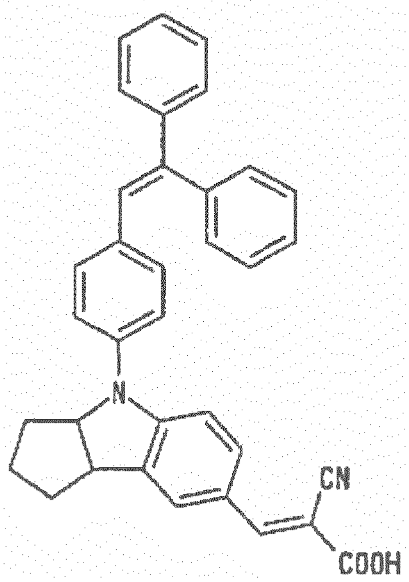

The semiconductor ultrafine particle, which can be used as a photosensitizer, may be an ultrafine particle of a sulfide semiconductor such as cadmium sulfide, lead sulfide and silver sulfide. The diameter of the semiconductor ultrafine particle is 1 nm to 10 nm, for example.

The photosensitizer is supported on a semiconductor by any of various methods known in the art. For example, the method may be one in which a substrate with a semiconductor layer (e.g., a porous semiconductor including no photosensitizer) formed thereon is immersed in a solution with a photosensitizer dissolved or dispersed therein. The solvent of the solution may be selected appropriately as one that is capable of dissolving the photosensitizer, such as water, alcohol, toluene or dimethylformamide. While being immersed in the solution of the photosensitizer, it may be heated or an ultrasonic wave may be applied thereto. After the immersion, an excess of the photosensitizer may be

removed by washing with a solvent (e.g., alcohol) and/or heating.

The amount of photosensitizer supported on the semiconductor **16** is in the range of $1\times10^{-10}$ to $1\times10^{-4}$ mol/Cm$^2$, for example, and is preferably in the range of $0.1\times10^{-8}$ to $9.0\times10^{-6}$ mol/cm$^2$, for example, in view of the photoelectric conversion efficiency and the cost.

Note that since CdS, ZnS, $In_2S_3$, PbS, $Mo_2S$, $WS_2$, $Sb_2S_3$, $Bi_2S_3$, $ZnCdS_2$, $Cu_2S$, InP, $Cu_2O$, CuO and CdSe listed above are capable of absorbing light whose wavelength is about 350 nm to about 1300 nm, if the semiconductor layer is formed by using these, the photosensitizer may be absent.

The photoanode **15A** may be an organic-inorganic hybrid perovskite compound having a perovskite structure (hereinafter referred to as a "perovskite compound"). While a perovskite compound is provided on the surface of a porous semiconductor, for example, as is a photosensitizer as described above, it has recently been found that it is different from a photosensitizer in that a perovskite compound itself is a semiconductor.

A perovskite compound is represented by a composition formula of $ABX_3$. Among others, perovskite compounds of which A is a metal element of group 13 to group 16 (e.g., Sn, Pb), B is a monovalent organic cation (e.g., methyl ammonium, ethyl ammonium) and X is a halogen element (e.g., Cl, Br, I) are preferred, and $CH_3NH_3PbI_3$ is particularly preferred. A perovskite-sensitized solar cell using $CH_3NH_3PbI_3$ is disclosed in J. Burschka et al., Nature 499, 316-319 (doi:10.1038/nature12340) for example.

Using a perovskite compound, having a high light-absorbing capability and a high charge separation efficiency, it is possible to obtain a photoelectric conversion element having a high conversion efficiency. Although a perovskite compound is easily affected by water or impurities, it is possible to suppress the deterioration of a perovskite compound by applying the novel structure of the present disclosure.

<Counter electrode>

The counter electrode **35A** functions as the positive electrode of the photoelectric conversion element, receiving holes from the solid compound layer **22** to be described later and giving electrons to the solid compound layer **22.** Materials of the counter electrode **35A** may include, for example, a metal such as platinum, gold, silver, copper, aluminum, rhodium or indium, a carbon material such as graphite, carbon nanotube and carbon with platinum supported thereon, a conductive metal oxide such as indium-tin complex oxide, antimony-doped tin oxide or fluorine-doped tin oxide, and a conductive polymer such as polyethylenedioxythiophene, polypyrrole or polyaniline. Among others, preferred materials include platinum, graphite and polyethylenedioxythiophene.

As shown in FIG. **2** to FIG. **4,** the counter electrode **35A** may be formed by the conductive layer **34** that transmits visible light therethrough, and a metal layer **36c** formed on the conductive layer **34.**

In a configuration where the counter electrode **35C** is arranged between the photoanode **15C** and the charge storage electrode **55C,** as illustrated in FIG. **4**, the metal layer **36c** of the counter electrode **35C** has through holes allowing the electrolyte solution **24** to pass therethrough. Such a metal layer **36c** of the counter electrode **35C** may include, for example, a mesh electrode, a grid electrode, an electrode with a conductive layer formed on a separator, and a porous conductive material. The mesh electrode may be, for example, a general-purpose platinum mesh available on the market. For example, an electrode with a conductive layer formed on a separator can be manufactured by depositing gold, platinum, or the like, on a separator by a sputtering method or a vapor deposition method.

<Electrolytic medium>

The electrolytic medium **24** is typically the electrolyte solution **24.** The electrolyte solution **24** includes a supporting electrolyte (supporting salt) and a solvent.

Example supporting electrolytes include, for example, an ammonium salt such as tetrabutylammonium perchlorate, tetraethylammonium hexafluorophosphate, an imidazolium salt or a pyridinium salt, and an alkali metal salt such as lithium perchlorate or potassium tetrafluoroborate.

Solvents with a good ion conductivity are preferred. While the solvent may be either an aqueous solvent or an organic solvent, an organic solvent is preferred in order to better stabilize the solute. For example, examples include a carbonate compound such as dimethyl carbonate, diethyl carbonate, methyl ethyl carbonate, ethylene carbonate or propylene carbonate, an ester compound such as methyl acetate, methyl propionate or γ-butyrolactone, an ether compound such as diethyl ether, 1,2-dimethoxyethane, 1,3-dioxolane, tetrahydrofuran or 2-methyl-tetrahydrofuran, a heterocyclic compound such as 3-methyl-2-oxazolidinone or 2-methylpyrrolidone, a nitrile compound such as acetonitrile, methoxyacetonitrile or propionitrile, and an aprotic polar compound such as sulfolane, dimethyl sulfoxide or dimethylformamide. These can be used alone or as a mixture of two or more thereof. Among others, preferred ones include a carbonate compound such as ethylene carbonate or propylene carbonate, a heterocyclic compound such as γ-butyrolactone, 3-methyl-2-oxazolidinone or 2-methylpyrrolidone, and a nitrile compound such as acetonitrile, methoxyacetonitrile, propionitrile, 3-methoxypropionitrile or valeronitrile.

Alternatively, an ionic liquid may be used as a solvent or may be mixed with the solvents listed above. Using an ionic liquid, it is possible to improve the effect of stabilizing the oxidation-reduction part of the solid compound layer 22 in contact with the electrolyte solution. An ionic liquid is characterized also in that it has a low volatility and a high flame retardancy.

While the ionic liquid may be any of known ionic liquids in general, examples thereof include, an imidazolium-based ionic liquid such as 1-ethyl-3-methylimidazolium tetracyanoborate, a pyridine-based ionic liquid, an alicyclic amine-based ionic liquid, an aliphatic amine-based ionic liquid, an azonium amine-based ionic liquid, and those described in European patent No. 718288, WO 95/18456 pamphlet, Electrochemistry, Vol.65, No.11, p.923 (1997), J. Electrochem. Soc. Vol.143, No.10, p.3099 (1996), and Inorg. Chem. Vol.35, p.1168 (1996).

The electrolyte solution **24** preferably does not include an oxidation reduction substance, as described above, and the oxidation-reduction substance included in the electrolyte solution **24** is preferably 10 mM at maximum, for example.

An oxidation-reduction substance refers to a pair of substances that reversibly exist as an oxidant and a reductant in an oxidation-reduction reaction. For example, oxidation-reduction substances include chlorine compound-chlorine, iodine compound-iodine, bromine compound-bromine, thallium ion (III)-thallium ion (I), mercury ion (II)-mercury ion (I), ruthenium ion (III)-ruthenium ion (II), copper ion (II)-copper ion (I), iron ion (III)-iron ion (II), nickel ion (II)-nickel ion (III), vanadium ion (III)-vanadium ion (II) and manganate ion-permanganate ion.

Such an oxidation-reduction substance being present in an electrolyte solution will lead to a substantial self-discharge when charged. This is because the oxidation-reduction substance functions as a discharge mediator between the solid compound layer and the charge storage electrode. The oxidation-reduction substance included in the electrolyte solution is 10 mM at maximum, preferably 1 mM or less, and more preferably 0.1 mM or less.

Note that the electrolytic medium **24** may be a gel electrolyte including an electrolyte solution, instead of an electrolyte solution. For example, a gel electrolyte can be obtained by mixing a gelling agent in an electrolyte solution. Examples of the gelling agent include a gelling agent that produces a polymer through a cross-linking reaction, a gelling agent including a polymerizable multifunctional monomer, and an oil gelling agent. The gelling electrolyte may be any of those used commonly, including, for example, a vinylidene fluoride-based polymer such as polyvinylidene fluoride, an acrylic acid-based polymer such as polyacrylic acid, an acrylonitrile-based polymer such as polyacrylonitrile, a polyether polymer such as polyethylene oxide, and a polymer including an amide structure in the structure thereof.

<Solid compound layer>

The solid compound layer **22** has a structure including the electrolyte solution **24** therein, as described above. For example, the solid compound layer **22** includes a polymer gel layer including a polymer that has an oxidation-reduction part. The solid compound layer **22** includes a porous medium or an intercalatable solid. Where the solid compound layer **22** includes a porous medium or an intercalatable solid, the solid compound layer **22** further includes a conductive carbon, for example. The intercalatable solid is $LiCoO_2$, $LiMnO_2$ or $LiNiO_2$, for example, and is obtained by mixing a fine powder thereof with a conductive carbon material and a binder. The conductive carbon material transports holes to the counter electrode **35A,** and reduces a photosensitizer that has been oxidized. The solid compound layer **22** has the function of an oxidation-reduction substance, while having the function of fixing or holding an oxidation-reduction substance.

Although the solid compound layer **22** is provided so as to be in direct contact with the photoanode **15A** and the counter electrode **35A** as illustrated in FIG. **2,** an electron transport layer may be provided between the photoanode **15A** and the solid compound layer **22.** The electron transport layer may be, for example, an n-type gel layer described in WO 2011/013760 pamphlet.

Next, a polymer included in the polymer gel layer will be described in detail.

The polymer gel layer includes a polymer and an electrolyte solution. The polymer gel layer is in a state where the electrolyte solution has been taken up by a mesh structure formed by the polymer, and is in a solid state as a whole. The polymer is preferably one of which the number-average molecular weight is 1000 or more, and preferably does not substantially include a low-molecular-weight component of which the molecular weight is less than 1000. The upper limit of the molecular weight of the polymer is not limited to any specific number, but it is 1,000,000 or less, for example. By removing the low-molecular-weight component, it is possible to prevent the low-molecular-weight component having an oxidation-reduction part from being eluted into the electrolyte solution **24** and being reduced at the charge storage electrode 55. The amount of the low-molecular-weight component, of which the molecular weight is 1000 or less, included in the polymer can be reduced by precipitation purification, or the like. The concentration of the oxidation-reduction substance to be eluted from the polymer into the electrolyte solution is preferably such that the elution concentration, as calculated in accordance with the following expression, is 1 mM or less, and more preferably 0.1 mM or less. Note that the concentration of the oxidation-reduction substance can be measured by a differential pulse voltammogram, or the like.

(concentration, in electrolyte solution, of oxidation-reduction substance used in solid compound layer) = (elution concentration)

The polymer preferably has a cross-linked structure. With a cross-linked structure, it is possible to suppress the elution of the low-molecular-weight component. The cross-linked structure is preferably a chemical cross-linked structure. This is because a chemical cross-linked structure has a higher stability than a physical cross-linked structure that is formed by polymer chains being tangled with each other. A chemical cross-linked structure may be formed by mixing in a cross-linker, for example. For example, 0.1 mol% or more, and more preferably 1 mol% or more, for example, of a cross-linker may be mixed in, with respect to the total amount of the monomer used for producing the polymer. The upper limit is not limited to any specific number, but is 30 mol% or less, for example. If the cross-linking density is too high, the electricity storing characteristics may be lowered.

A polymer included in a polymer gel layer is, for example, a polymerization of monomers, and the structure corresponding to a single monomer is referred to as the "repeat unit". Herein, it will be referred to simply as a "unit". The number of kinds of monomers is not limited to one, and two or more kinds of monomers may be polymerized to produce a polymer. For example, if a monomer having only one polymerizable group (hereinafter referred to as a "mono-functional monomer") is polymerized, there is obtained a chain polymer. If a monomer having two or more polymerizable groups (hereinafter referred to as a "multifunctional monomer") is mixed with a mono-functional monomer, there is obtained a polymer having a cross-linked structure. By adding a cross-linker, polymer chains may be cross-linked together.

A polymer used in the photoelectric conversion element 200A of the embodiment of the present invention has an oxidation-reduction part that can be oxidized/reduced repeatedly. An oxidation-reduction part refers to a part capable of stably giving and receiving electrons through an oxidation-reduction reaction (redox reaction), and is a stable radical such as a nitroxyl radical, for example. Of all the units of a polymer, a unit having an oxidation-reduction part is herein referred to as an oxidation-reduction unit (or a redox unit), and any unit other than the oxidation-reduction unit is herein referred to as a "base unit". The oxidation-reduction unit refers to TEMPO (2,2,6,6-tetramethylpiperidine 1-oxyl) having a nitroxyl radical, for example. The base unit and the oxidation-reduction unit may be bound together as the oxidation-reduction unit binds, as a side chain, to the main chain formed by the base unit, for example, or the base unit and the oxidation-reduction unit may each form a main chain. The base unit and the oxidation-reduction unit may each include a plurality of kinds of units, and the base unit and the oxidation-reduction unit may each include a cross-linked unit corresponding to a multi-functional monomer. A unit herein corresponds to a monomer, for the sake of simplicity, but the present invention is not limited thereto, and a unit may be a constituent unit corresponding to an oligomer or a polymer.

Assume that General Formula (1) below represents a polymer having an oxidation-reduction part as described above.

$$(X_i)_{nj}:Y_k \ ... \ (1)$$

$X_i$ denotes a base unit, and Y denotes an oxidation-reduction unit. $(X_i)_n$ denotes a basic polymerization unit obtained by n Xi's bound together. $(X_i)_{nj}$ indicates that the polymer includes j basic polymerization units $(X_i)_n$, and $Y_k$ indicates that the polymer includes k Y's. Herein, n is an integer of 2 or more, and j and k are independently an integer of 1 or more. The upper limit for n, j and k is 100,000, for example. The oxidation-reduction unit Y may be bound to any position of the basic polymerization unit $(X_i)_n$, and $X_i$ and Y may each include two or more kinds. Note that where there are two or more kinds of Y, they preferably have oxidation-reduction parts of which the oxidation-reduction potentials are close to each other, in view of the electron exchange reaction.

Polymers having an oxidation-reduction part include, for example, a polymer including a quinone derivative having a quinone chemically bound thereto, a polymer including an imide derivative having an imide, a polymer including a phenoxyl derivative having a phenoxyl, and a polymer including a viologen derivative having a viologen.

Of the polymers listed above, example polymers including a quinone derivative include those having chemical structures of [Formula 3] to [Formula 6] below. In [Formula 3] to [Formula 6], R is a saturated or unsaturated hydrocarbon such as methylene, ethylene, propane-1,3-dienyl, ethylidene, propane-2,2-diyl, alkane diyl, benzylidene, propylene, vinylidene, propene-1,3-diyl or but-1-ene-1,4-diyl; a cyclic hydrocarbon such as cyclohexane diyl, cyclohexene diyl, cyclohexadiene diyl, phenylene, naphthalene or biphenylene; a keto or divalent acyl group such as oxalyl, malonyl, succinyl, glutanyl, adipoyl, alkanedioyl, sebacoyl, fumaroyl, maleoyl, phthaloyl, isophthaloyl or terephthaloyl; an ether

or ester such as oxy, oxymethylenoxy or oxycarbonyl; a sulfur-containing group such as sulfanediyl, sulfanyl or sulfonyl; a nitrogen-containing group such as imino, nitrilo, hydrazo, azo, azino, diazoamino, urylene or amide; a silicon-containing group such as silanediyl or disilane-1,2-diyl; or a group obtained by substituting a terminal thereof or a composite group thereof.

[Formula 3] is an example polymer in which anthraquinone is chemically bound to the main chain. [Formula 4] is an example polymer in which the main chain is formed by base units including anthraquinone. [Formula 5] is an example polymer having a cross-linked unit including anthraquinone. Moreover, [Formula 6] is an example anthraquinone having a proton-donating group that forms an intramolecular hydrogen bond with an oxygen atom.

[Formula 3]

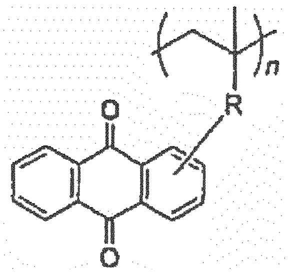

[Formula 4]

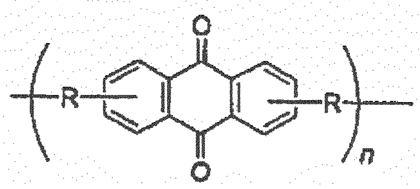

[Formula 5]

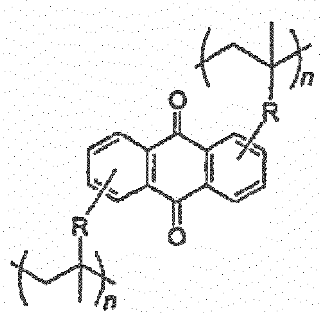

[Formula 6]

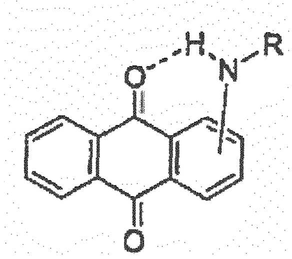

A polyimide shown in [Formula 7] or [Formula 8] may be used as a polymer in which the oxidation-reduction unit Y includes an imide derivative. Herein, in [Formula 7] and [Formula 8], $R_1$ to $R_3$ each denote an aromatic group such as a phenylene group, an aliphatic chain such as an alkylene group and an alkyl ether, or an ether group, with the portion excluding $R_1$ to $R_3$ being the oxidation-reduction unit Y. The polyimide framework may be cross-linked at the portions of $R_1$ to $R_3$. Note that phthalimide and pyromellitimide have an oxidation-reduction property.

[Formula 7]

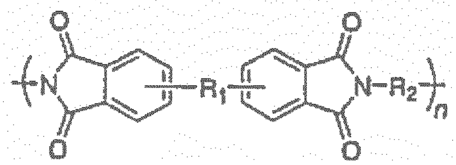

[Formula 8]

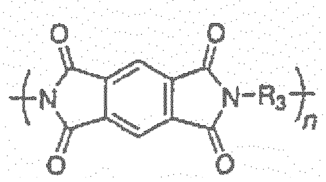

Example polymers including a phenoxyl derivative include, for example, a galvinoxyl polymer as shown in [Formula 9]. In the galvinoxyl polymer, the galvinoxyl radical shown in [Formula 10] accounts for the oxidation-reduction part. In [Formula 10], "·" denotes an unpaired electron.

[Formula 9]

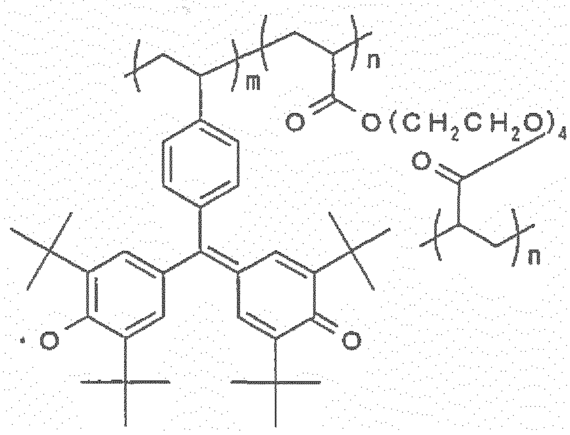

[Formula 10]

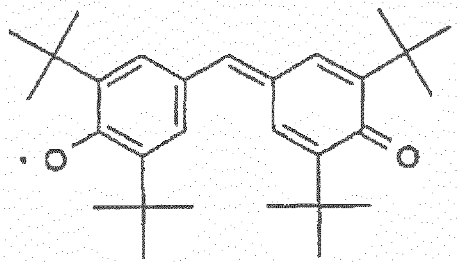

Example polymers including a viologen derivative include, for example, a polyviologen as shown in [Formula 11] or [Formula 12]. In the polyviologen, the portion shown in [Formula 13] accounts for the oxidation-reduction unit Y.

[Formula 11]

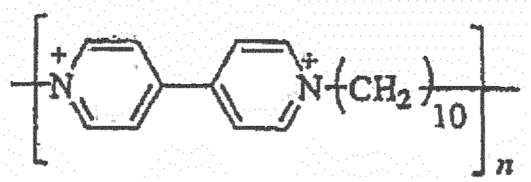

[Formula 12]

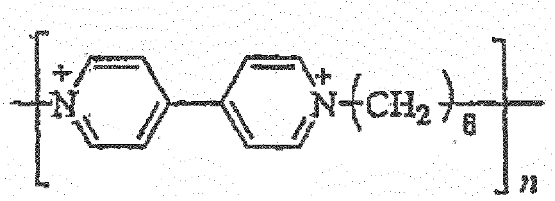

[Formula 13]

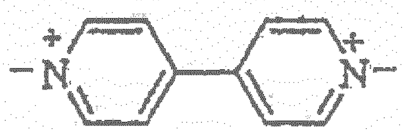

Note that m and n in [Formula 1] to [Formula 3], [Formula 5] to [Formula 7], [Formula 9] and [Formula 10] each denote the number of repetitions (corresponding to the degree of polymerization) for each unit, and m and n are each an integer or 1 or 2 or more and the upper limit thereof is 100,000, for example.

A polymer having a stable radical as the oxidation-reduction part is advantageous in that the charge exchange between stable radicals is fast, for example. A stable radical produces a radical over the course of at least one of the electrochemical oxidation reaction and the electrochemical reduction reaction. The stable radical species is not limited to any particular species, but is preferably nitroxyl radical (NO·).

A polymer having a stable radical includes, as the oxidation-reduction unit Y of General Formula (1) above, at least one of [Formula 14] and [Formula 15] below, for example.

[Formula 14]

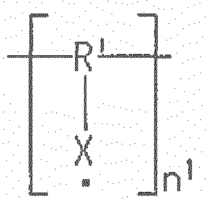

In [Formula 14], the substituent $R^1$ is an substituted or unsubstituted alkylene group of which the carbon number is 2 to 30, an alkenylene group of which the carbon number is 2 to 30, or an arylene group of which the carbon number is 4 to 30, and X is preferably an oxy radical group, a sulfur radical group, a hydrazyl radical group, a carbon radical group, a boron radical group, or the like, other than a nitroxyl radical group. $n^1$ is an integer of 2 or more.

[Formula 15]

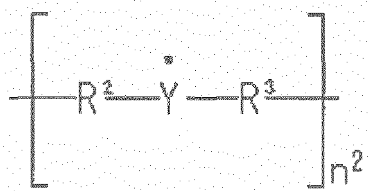

In [Formula 15], each of the substituents $R^2$ and $R^3$ is independently a substituted or unsubstituted alkylene group of which the carbon number is 2 to 30, an alkenylene group of which the carbon number is 2 to 30, or an arylene group of which the carbon number is 4 to 30, Y is a nitroxyl radical group, a sulfur radical group, a hydrazyl radical group or a carbon radical group, an $n^2$ is an integer of 2 or more.

Examples of the stable radical Y· shown in [Formula 14] and [Formula 15] include, for example, an oxy radical, a nitroxyl radical, a carbon radical, a nitrogen radical, a boron radical and a sulfur radical.

Specific examples of the oxy radical include, for example, an aryl oxy radical shown in [Formula 16] and

**[0096]** [Formula 17] below, and a semiquinone radical shown in [Formula 18].

[Formula 16]

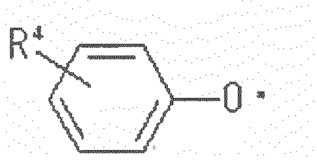

[Formula 17]

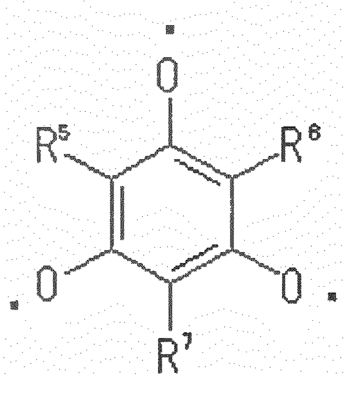

[Formula 18]

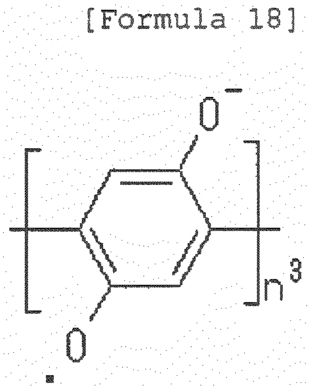

In [Formula 16] to [Formula 18], each of the substituents $R^4$ to $R^7$ is independently a hydrogen atom, a substituted or unsubstituted, aliphatic or aromatic hydrocarbon group of which the carbon number is 1 to 30, a halogen group, a hydroxyl group, a nitro group, a nitroso group, a cyano group, an alkoxy group, an aryloxy group or an acyl group.

Specific examples of the nitroxyl radical include a stable radical having a peridinoxy ring shown in [Formula 19] below, a stable radical having a pyrrolidinoxy ring shown in [Formula 20], a stable radical having a pyrrolinoxy ring shown in [Formula 21], and a stable radical having a nitronyl nitroxide structure shown in [Formula 22].

[Formula 19]

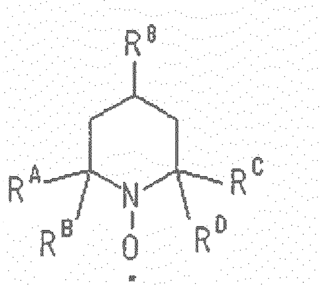

[Formula 20]

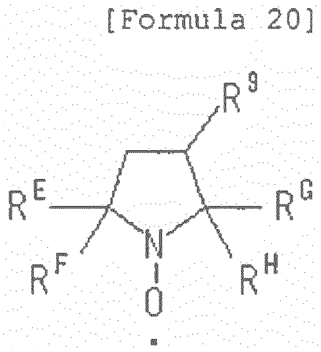

[Formula 21]

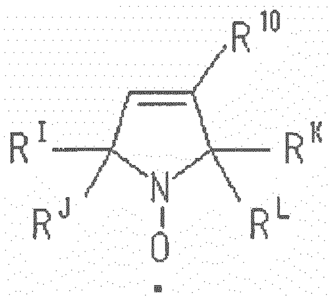

[Formula 22]

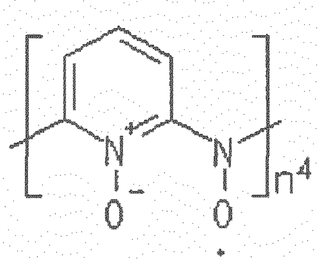

In [Formula 19] to [Formula 22], each of $R^8$ to $R^{10}$ and $R^A$ to $R^L$ is independently a hydrogen atom, a substituted or unsubstituted, aliphatic or aromatic hydrocarbon group of which the carbon number is 1 to 30, a halogen group, a hydroxyl group, a nitro group, a nitroso group, a cyano group, an alkoxy group, an aryloxy group or an acyl group. In [Formula 22], $n^4$ is an integer of 2 or more.

Specific examples of the nitroxyl radical include a radical having a trivalent hydrazyl group shown in [Formula 23] below, a radical having a trivalent verdazyl group shown in [Formula 24], and a radical having an aminotriazine structure shown in [Formula 25].

[Formula 23]

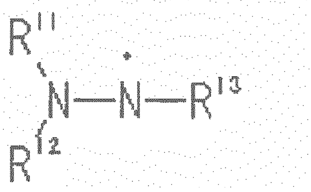

[Formula 24]

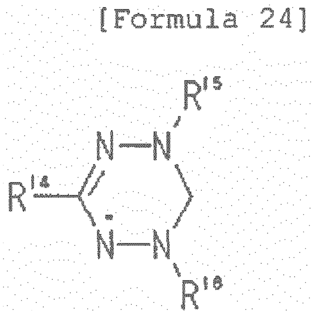

[Formula 25]

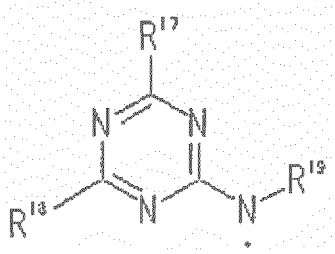

In [Formula 23] to [Formula 25], each of $R_{11}$ to $R_{19}$ is independently a hydrogen atom, a substituted or unsubstituted, aliphatic or aromatic hydrocarbon group of which the carbon number is 1 to 30, a halogen group, a hydroxyl group, a nitro group, a nitroso group, a cyano group, an alkoxy group, an aryloxy group or an acyl group.

Polymers having radicals shown in [Formula 14] to [Formula 25] have a good stability, and as a result, they can be stably used in a photoelectric conversion element or an energy storage element, and it is therefore possible to realize a photoelectric conversion element having a good stability and having a good response speed.

Example polymers having a stable radical include, for example, nitroxyl radical polymers shown in [Formula 26] to [Formula 29] below.

[Formula 26]

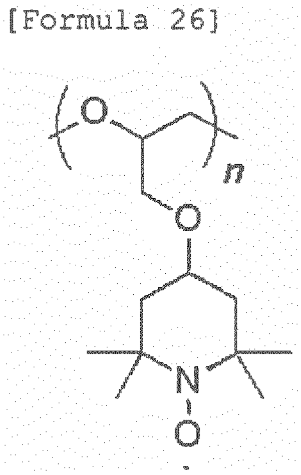

[Formula 27]

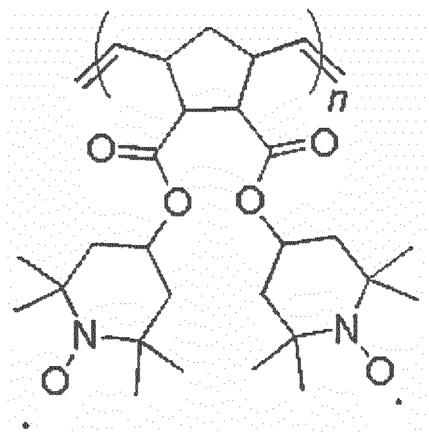

[Formula 28]

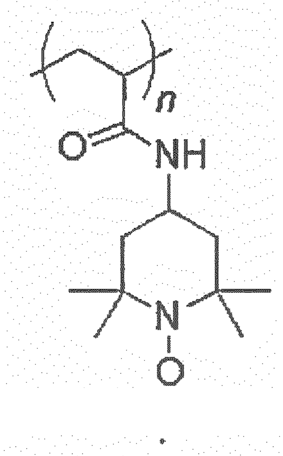

[Formula 29]

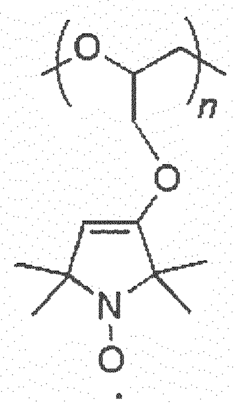

In [Formula 26] to [Formula 29], n denotes the number of repetitions (corresponding to the degree of polymerization) for the unit, and n is an integer of 1 or more and the upper limit thereof is 100,000, for example.

A polymer gel layer preferably further includes a conductive aid. While a polymer gel having a stable radical as an oxidation-reduction part is conductive in an electrolyte solution, the internal resistance thereof can be further lowered by mixing a conductive aid therewith. Therefore, it is possible to increase the charge-discharge capacity of the photoelectric conversion element and to increase the discharge rate thereof. A conductive aid is, for example, a low-resistance fine particle, and examples thereof include a conductive carbon, graphite, a simple metal and an impurity-doped semiconductor. Particularly, a carbon material such as a vapor-grown carbon fiber and a carbon nanotube can be used suitably, for example. The particle diameter of the fine particle is, for example, 1 nm to 100 $\mu$m, preferably 1 nm to 10 $\mu$m, and more preferably 1 nm to 1 $\mu$m. Particles having a high aspect ratio may also be used.

<Charge storage electrode>

The charge storage electrode 55A includes, for example, the oxide conductive layer 54, the metal layer 56 formed on the oxide conductive layer 54, and the charge storage layer 58 formed on the metal layer 56, as described above. Other than a mixture of tungsten oxide and conductive carbon, the charge storage layer 58 can be formed by using a resin with graphite dispersed therein (an active substance for a capacitor), an oxidation-reduction substance (e.g., a polymer compound that can be oxidized and reduced) such as poly decamethylferrocene, or a conductive polymer such as polypyrrole described in Patent Document No. 1, for example.

Note that a photoelectric conversion element according to another embodiment of the present invention includes a photocathode, for example, instead of the photoanodes 15A, 15B and 15C of the photoelectric conversion elements 200A to 200C described above. Such a photoelectric conversion element also has the electricity storing function. The photocathode may be one with a sensitizer supported on a nickel oxide, for example.

Next, referring to FIG. 5, an electrochemical device according to another embodiment of the present invention

will be described. In the electrochemical device 300 shown in FIG. 5, the first electrode is a viologen electrode 15D, the second electrode is a storage positive electrode 35D, and the third electrode is a storage negative electrode 55D.

The electrochemical device 300 is an electricity storage device whose battery level can be visually checked as the color of a viologen layer 16d of the viologen electrode **15D** changes in accordance with the stored capacity.

Herein, the storage positive electrode **35D** can be formed by using a positive electrode material of a common secondary battery. For the storage negative electrode **55D**, a negative electrode material of a common secondary battery can be used. The viologen electrode **15D** is obtained by forming the viologen conductive layer **16d** on a transparent conductive layer **14**. The viologen conductive layer **16d** is formed by depositing a porous conductive layer on which 1,1'-dimethyl-4,4'-bipyridinium dichloride (common name: viologen) is supported, or a polymer having a viologen in the framework.

For example, the electrochemical device **300** shown in FIG. 5 includes the following components.
Substrate: glass substrate (thickness: 1 mm)
Storage positive electrode **35D** (transparent conductive layer **34**): fluorine-doped $SnO_2$ layer (surface resistance: 10 Ω/square)
Solid compound layer **22**: mixture of poly((2,2,6,6-tetramethylpiperidine-1-oxyl-oxyl-4-yl)-glycidyl ether) and vapor-grown carbon fiber (mass ratio: 2:1)

Viologen electrode **15D**

Transparent conductive layer **14**: fluorine-doped $SnO_2$ layer (surface resistance: 10 Ω/square)
Viologen conductive layer **16d**: ZnO porous layer with methyl viologen supported thereon (which for example can be formed by referring to Mano Lett., Vol.8, No.7, 2008, or the like)
Electrolyte solution **24**: electrolyte solution in which 0.1 mol/L of lithium perchlorate is dissolved in acetonitrile
Substrate **52**: glass substrate (thickness: 1 mm) Storage negative electrode **55D**
Oxide conductive layer **54**: fluorine-doped $SnO_2$ layer
(surface resistance: 10 Ω/square)
Metal layer **56**: platinum layer
Charge storage layer **58**: material obtained by mixing together tungsten oxide ($WO_3$) and vapor-grown carbon fiber at a mass ratio of 5:1

[Examples]

The present disclosure will now be described in detail by way of examples. Photoelectric conversion elements of Examples 1 and 2 and Reference Example 1 were produced to evaluate the characteristics thereof.

[Example 1]

A photoelectric conversion element having substantially the same structure as that of the photoelectric conversion element **200A** shown in FIG. 2 was produced. The components were as follows.
Substrate 12: glass substrate (thickness: 1 mm)
Transparent conductive layer **14**: fluorine-doped $SnO_2$ layer (surface resistance: 10 Ω/square)
Non-porous semiconductor layer **16a**: titanium oxide layer (thickness: 10 nm)
Porous semiconductor layer **16b**: porous titanium oxide, photosensitizing dye (D131 from Mitsubishi Chemical Corporation)
Solid compound layer **22**: mixture of poly((2,2,6,6-tetramethylpiperidine-1-oxyl-oxyl-4-yl)-glycidyl ether) and vapor-grown carbon fiber (designated as "C" in Table 1)

(mass ratio: 2:1)

Electrolyte solution **24**: electrolyte solution, in which 0.025 mol/L of n-methyl benzimidazole and 0.1 mol/L of lithium perchlorate are dissolved in acetonitrile
Substrate **52**: glass substrate (thickness: 1 mm)
Oxide conductive layer **34**, **54**: fluorine-doped $SnO_2$
layer (surface resistance: 10 Ω/square)

Metal layer **36**, **56**: platinum layer

Charge storage layer **58**: material obtained by mixing together tungsten oxide ($WO_3$) and vapor-grown carbon fiber at a mass ratio of 5:1

The photoelectric conversion element of Example 1 was produced as follows.

Two conductive glass substrates with a thickness of 1 mm (from Asahi Glass Co., Ltd.) having a fluorine-doped $SnO_2$ layer were prepared. These were used as the substrate **12** having the transparent conductive layer **14**, and the substrate **52** having the oxide conductive layer **34**, **54**.

A high-purity titanium oxide powder with an average primary particle diameter of 20 nm was dispersed in ethyl cellulose, thus producing a paste for screen printing.

After the titanium oxide layer **16a** having a thickness of about 10 nm was formed by a sputtering method on the fluorine-doped $SnO_2$ layer **14** of one conductive glass substrate, the paste described above was applied thereon and allowed to dry, and the resultant dried product was baked in the air at 500°C for 30 minutes, thereby forming a porous titanium oxide layer (titanium coat) having a thickness of 2 $\mu$m.

Next, A substrate with a porous titanium oxide layer formed thereon was immersed in an acetonitrile-butanol 1:1 mixed solvent solution of which the concentration of the photosensitizing dye (D131 (from Mitsubishi Paper Mills Limited)) was 0.3 mM shown in [Formula 13] above, and was left standing in a dark place for 16 hours at room temperature, thereby obtaining a photosensitizer supported on the porous titanium oxide layer (the porous semiconductor layer **16b**). Thus, the photoanode **15A** was formed.

The surface of the other glass substrate was masked, and platinum was deposited thereon by a sputtering method, thereby forming the metal layer **36**, **56**.

0.5 g of tungsten oxide ($WO_3$: from WAKO) and 0.1 g of VGCF (Registered Trademark of vapor-grown carbon fiber from Showa Denko K.K.) were put in a mortar, and stirred and mixed for 10 minutes. After mixing, 1 ml of NMP (n-methyl-pyrrolidone) and 0.1 mg of PVDF (polyvinylidene fluoride) were added, and the product was further stirred for 10 minutes, thereby obtaining a slurry-like suspension.

After peeling the mask off, the slurry was applied on the metal layer **56** by a blade method to obtain a thickness of 10 $\mu$m, thereby forming the charge storage layer **58**. Thus, the charge storage electrode **55A** was obtained.

A polymer represented by [Formula 30] below was used for the formation of the solid compound layer **22**.

[Formula 30]

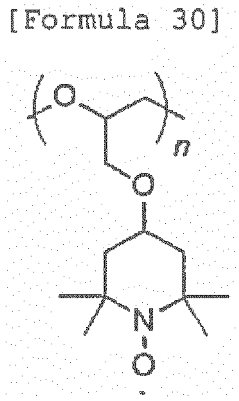

The production method will be shown below.

Epichlorohydrin 2.5 ml (30 mmol) and tetrabutylammonium sodium hydrogen sulfate 84 mg (239 $\mu$mol) are added to 4 ml of 50 mass % sodium hydroxide aqueous solution, and the mixture is stirred. To this, 1.03 g (5.98 mmol) of 4-hydroxy-2,2,6,6-tetramethylpiperidine-1-oxyl is added, and the mixture is allowed to react for 12 hours at room temperature. Next, using ether extraction and an ether/hexane mixed solvent (mixing volume ratio = 1/1), 1.14 g of 4-glycidyloxy-2,2,6,6-tetramethylpiperidine-1-oxyl was obtained (yield percentage: 84%) after column purification.

228 mg (1.00 mmol) of 4-glycidyloxy-2,2,6,6-tetramethylpiperidine-1-oxyl obtained as described above was added in tetrahydrofuran (=THF), with 5.6 mg (0.05 mmol) of tert-butoxypotassium (=t-BuOK) as the polymerization initiator, and the mixture was allowed to react for 24 hours under a nitrogen atmosphere at 60°C, thereby obtaining poly((2,2,6,6-tetramethylpiperidine-1-oxyl-oxyl-9-yl)-glycidyl ether) (abbreviated hereinafter as PTGE) as orange powder after re-precipitation purification into diethyl ether (see Structural Formula [Formula 30]).

The molecular weight of the obtained polymer was 3600 in terms of the number-average molecular weight (as polystyrene), and the degree of dispersion (the weight-average molecular weight / the number-average molecular weight) was 1.4 (yield: 150 mg, yield percentage: 66%).

10 mg of PTGE and 20 mg of VGCF (Registered Trademark of vapor-grown carbon fiber from Showa Denko

K.K.) were suspended in 1 ml of a DMF solvent, and applied by spin-coating on the photoanode **15**, thereby forming the solid compound layer **22** having a thickness of 10 $\mu$m.

Next, the separator **42** was arranged on the solid compound layer **22**. In this process, the separator **42** was arranged so that a portion of the solid compound **22** is exposed. Celgard 2400" (from Polypore, Inc.) was used as the separator **42**.

Next, a sealant of a hot-melt adhesive ("Bynel" from Mitsui DuPont Polychemicals) was applied on the glass substrate **52** having the two electrodes **35A** and **55A** thereon so as to surround the area where the porous titanium oxide layer **16b** of the photoanode **15A** was formed, and the glass substrate **12** having the photoanode **15A** formed thereon was laid on the glass substrate **52**, and the substrates were bonded together through pressurization with heat. In this process, the pressurization was applied in the thickness direction, and the portion of the solid compound **22** exposed through the separator **42** and the counter electrode **35A** were brought into contact with each other. Note that the separator **42** was interposed between the solid compound **22** and the charge storage layer **58**, and the contact between the solid compound **22** and the charge storage layer **58** was prevented by the separator **48**.

Next, a sealant of a hot-melt adhesive ("Bynel" from Mitsui DuPont Polychemicals) was placed on the glass substrate **52** having the two electrodes **35A** and **55A** thereon so as to surround the area where the porous titanium oxide layer **16b** of the photoanode **15A** was formed, and the glass substrate **12** having the photoanode **15A** formed thereon was laid on the glass substrate **52**, and the substrates were bonded together through pressurization with heat. The glass substrate **52**, on which the charge storage electrode **55A** was formed, had been bored to make a hole with a diamond drill.

Next, an electrolyte solution was prepared by dissolving 0.025 mol/L of n-methyl benzimidazole and 0.1 mol/L of lithium perchlorate in acetonitrile, and the electrolyte solution **24** was injected through the hole, thereby obtaining the photoelectric conversion element of Example 1. The hole was closed by a capping material (a curable resin).

[Example 2]

A photoelectric conversion element having substantially the same structure as that of the photoelectric conversion element **200B** shown in FIG. 3 was produced.

In the production of a substrate having the photoanode **15A** thereon in the method for manufacturing the photoelectric conversion element **200A** of Example 1, the transparent conductive layer **14** was patterned so as to form the transparent conductive layers **14** and **34**. A platinum mesh electrode **36** was bonded to the transparent conductive layer **34** by a conductive adhesive, thereby forming the counter electrode **35B**.

On the other hand, the platinum layer **56** was deposited on the glass substrate **52** having the transparent conductive layer **54** thereon, and the charge storage layer **58** was formed on the platinum layer **56**, thereby obtaining the charge storage electrode **55B**.

The photoelectric conversion element of Example 2 was formed, as in Example 1, using these two substrates.

[Reference Example 1]

As with the method for manufacturing the photoelectric conversion element **200A** of Example 1, the substrate **12** having the photoanode **15A** thereon and the substrate **52** having the counter electrode **35A** and the charge storage electrode **55A** thereon were produced and arranged in a beaker.

Next, an electrolyte solution was prepared by dissolving 0.025 mol/L of n-methyl benzimidazole and 0.1 mol/L of lithium perchlorate in acetonitrile, and the electrolyte solution was poured into the beaker, thereby producing a beaker cell electrochemically equivalent to the photoelectric conversion element **200A** of Example 1.

FIG. **6** shows the results of evaluating the retention (%) of the electrolyte solution when the photoelectric conversion element was stored in the atmospheric air at room temperature for Example 1 and for Reference Example 1 described above. In FIG. 6, open diamond symbols represent the result for Example 1, and solid diamond symbols represent the result for Reference Example 1.

As can be seen from FIG. 6, the retention of the electrolyte solution was 90% or more with the photoelectric conversion element of Example 1 even after being stored for 200 hours in the atmospheric air at room temperature, demonstrating a good preservation stability. On the other hand, with the photoelectric conversion element of Reference Example 1, the electrolyte solution easily volatilized, dropping to near 0% after some tens of hours, indicating no stability.

Thus, according to the embodiment of the present invention, with such structural features as described above, it is possible to improve the preservation stability of an electrolytic medium in an electrochemical device having three or more electrodes having electrochemically different functions.

## INDUSTRIAL APPLICABILITY

An electrochemical device of the present disclosure is applicable to various electrochemical devices having

three or more electrodes having electrochemically different functions, such as photoelectric conversion elements having an electricity storing function.

## REFERENCE SIGNS LIST

| | |
|---|---|
| 12 | Substrate |
| 14 | Transparent conductive layer |
| 15A | Photoanode |
| 16 | Semiconductor layer including photosensitizer |
| 22 | Solid compound layer |
| 24 | Electrolytic medium |
| 34 | Transparent conductive layer |
| 35A | Counter electrode |
| 36 | Metal layer |
| 52 | Substrate |
| 54 | Oxide conductive layer |
| 55A | Charge storage electrode |
| 56 | Metal layer |
| 58 | Charge storage layer |
| 100 | Electrochemical device |
| 200A | Photoelectric conversion element |

## Claims

**1.** An electrochemical device comprising:

a first substrate;
a second substrate arranged so that a gap is formed between the first substrate and the second substrate;
an electrolytic medium including an electrolyte solution filling the gap;
a sealing portion formed between the first substrate and the second substrate for sealing the electrolytic medium in the gap; and
a first, a second and a third electrode being in contact with the electrolytic medium and each having an electrochemically different function,
wherein at least a portion of each of the first, second and third electrodes is formed on the first substrate or on the second substrate.

**2.** The electrochemical device according to claim 1, wherein at least a portion of each of two of the first, second and third electrodes is formed on the first substrate, while at least a portion of the remaining one of the first, second and third electrodes is formed on the second substrate.

**3.** The electrochemical device according to claim 1 or 2, wherein the first electrode includes a first conductive layer and a semiconductor layer formed on the first conductive layer, and the semiconductor layer is formed so that the first conductive layer is not in direct contact with the electrolytic medium.

**4.** The electrochemical device according to claim 3, wherein the first electrode is formed on the first substrate, and there is an area on the first substrate where the first conductive layer is absent and only the semiconductor layer is present, as seen from a direction normal to the first substrate.

**5.** The electrochemical device according to claim 3 or 4, wherein the first electrode is a photoanode, the second electrode is a counter electrode, and the third electrode is a charge storage electrode.

**6.** The electrochemical device according to claim 5, wherein:

the first electrode is formed on the first substrate; and
the second electrode and the third electrode are formed on the second substrate.

**7.** The electrochemical device according to claim 5, wherein:

the first electrode and at least a portion of the second electrode are formed on the first substrate; and
the third electrode is formed on the second substrate.

**8.** The electrochemical device according to any one of claims 5 to 7, further comprising a solid compound layer arranged between the first electrode and the second electrode, wherein the solid compound layer includes the electrolytic medium.

**9.** The electrochemical device according to claim 8, further comprising a separator between the solid compound layer and the third electrode.

**10.** The electrochemical device according to any one of claims 5 to 9, wherein the semiconductor layer includes a non-porous semiconductor layer formed on a side of the conductive layer and a porous semiconductor layer formed on the non-porous semiconductor layer, and the porous semiconductor layer includes a sensitizing dye.

**11.** The electrochemical device according to any one of claims 5 to 9, wherein the photoanode includes a perovskite compound.

FIG.1

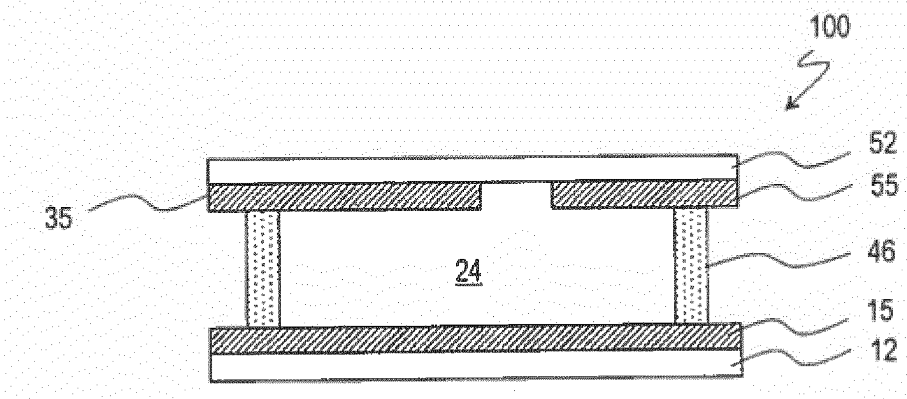
100
52
55
35
46
24
15
12

FIG.2

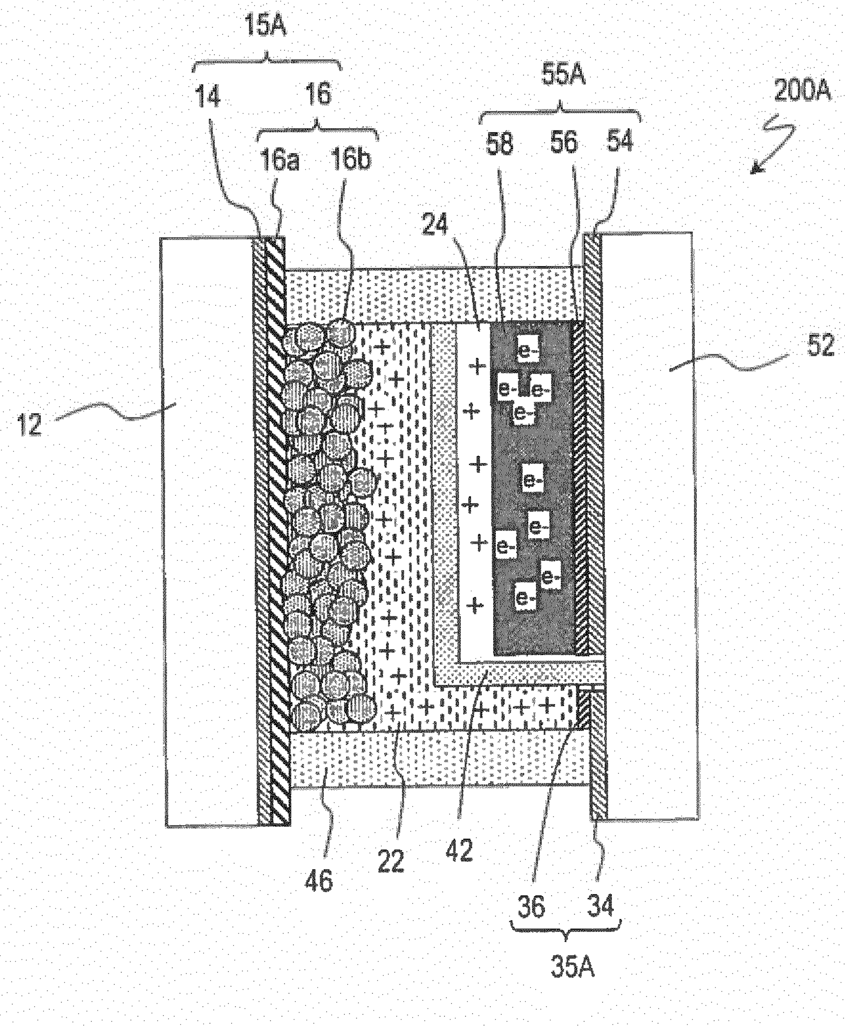
15A
14
16
16a
16b
55A
58
56
54
200A
24
12
52
46
22
42
36
34
35A

FIG.3

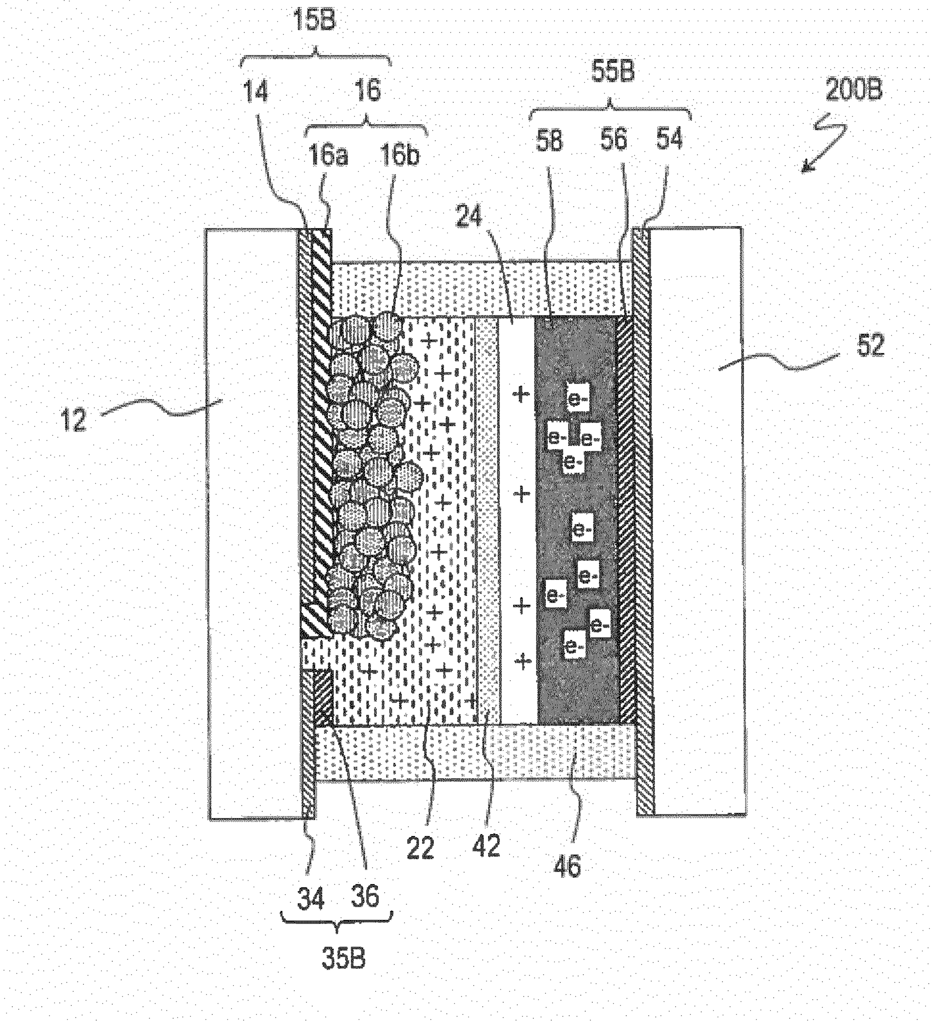

FIG.4

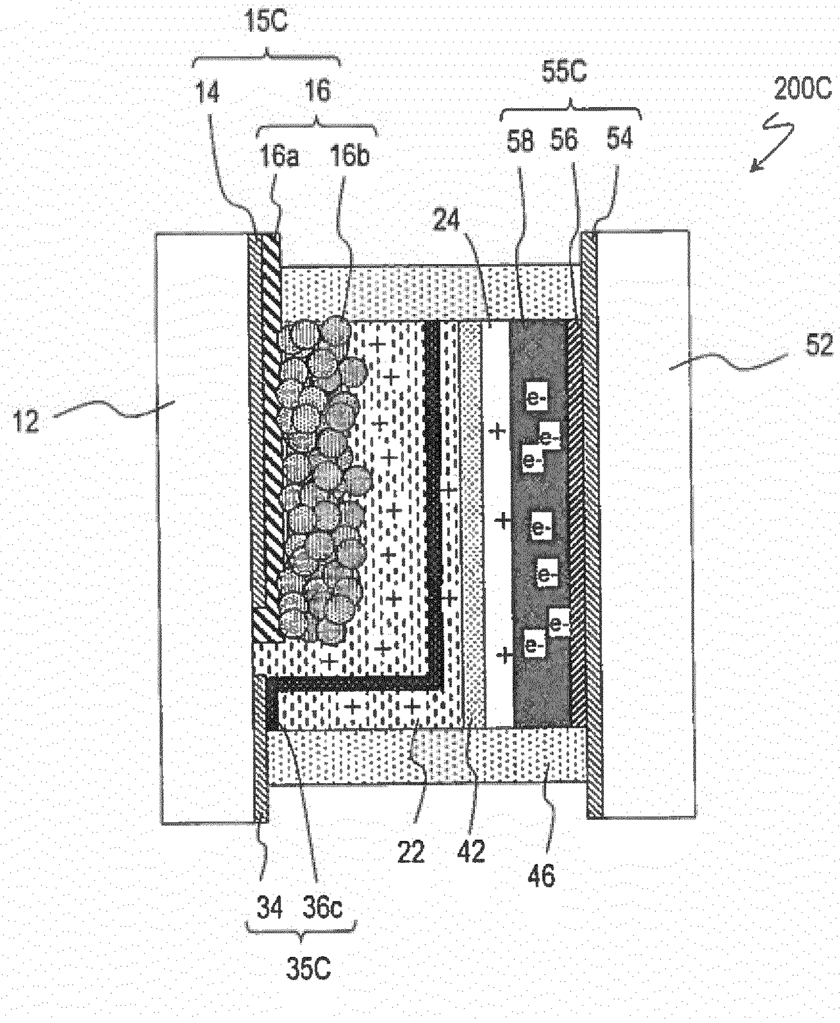

FIG.5

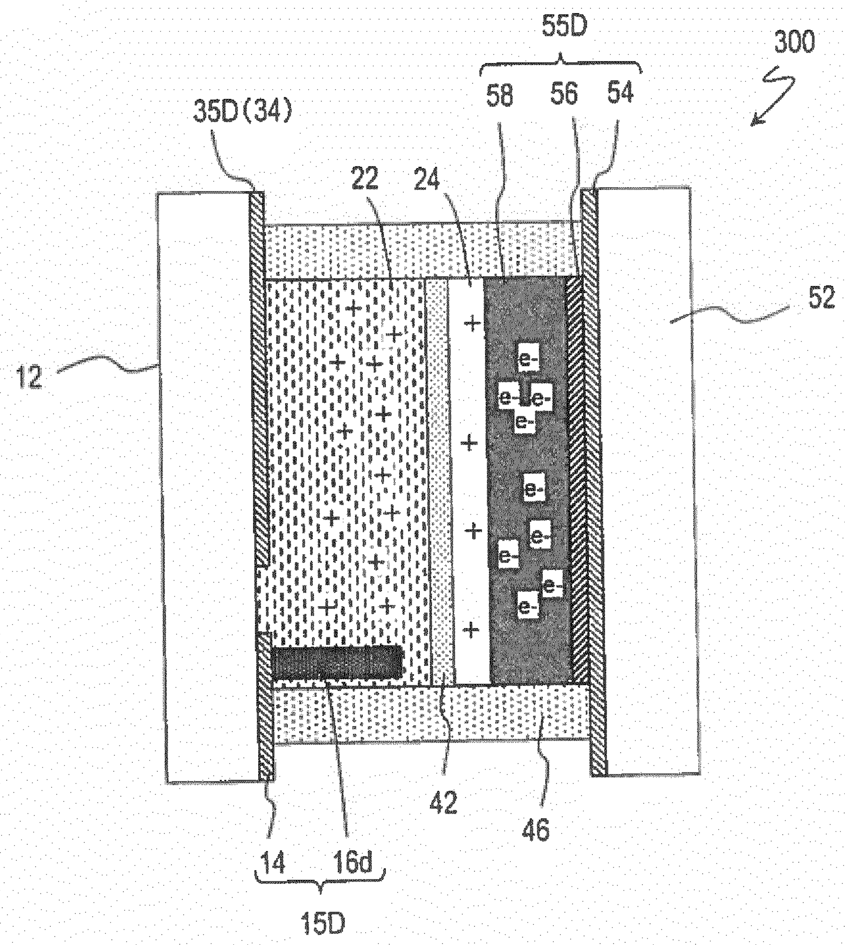
55D
300
58
56
54
35D (34)
22
24
52
12
e-
+
42
46
14
16d
15D

FIG.6

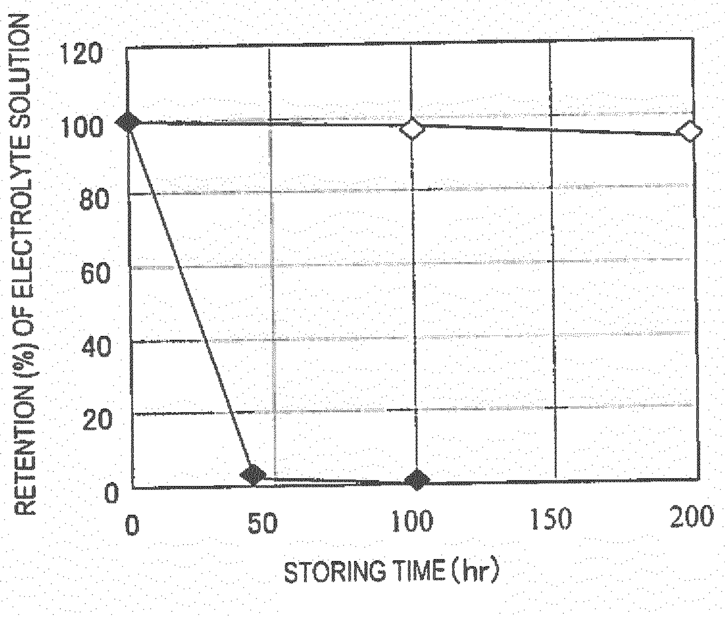
RETENTION (%) OF ELECTROLYTE SOLUTION
120
100
80
60
40
20
0
0
50
100
150
200
STORING TIME (hr)

## INTERNATIONAL SEARCH REPORT

International application No.
PCT/JP2014/003256

A. CLASSIFICATION OF SUBJECT MATTER
*H01G9/20*(2006.01)i, *H01G9/26*(2006.01)i

According to International Patent Classification (IPC) or to both national classification and IPC

B. FIELDS SEARCHED

Minimum documentation searched (classification system followed by classification symbols)
H01G9/20, H01G9/26

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2008-192441 A (NGK Spark Plug Co., Ltd.),<br>21 August 2008 (21.08.2008),<br>claims; paragraphs [0040] to [0047]; fig. 4, 8, 12<br>(Family: none) | 1,2<br>3-11 |
| Y | JP 2005-108836 A (Samsung SDI Co., Ltd.),<br>21 April 2005 (21.04.2005),<br>claims<br>& US 2005/0067009 A1 & EP 1523019 A2<br>& KR 10-2005-0030759 A | 3-11 |
| Y | JP 2002-151168 A (Sharp Corp.),<br>24 May 2002 (24.05.2002),<br>claims<br>(Family: none) | 3-11 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 15 July, 2014 (15.07.14) | 29 July, 2014 (29.07.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2014/003256

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2011-76893 A (Dainippon Printing Co., Ltd.), 14 April 2011 (14.04.2011), claims & US 2012/0118379 A1 & WO 2011/040102 A1 & CN 102549835 A | 3-11 |
| Y | JP 2012-59613 A (Peccell Technologies, Inc.), 22 March 2012 (22.03.2012), paragraphs [0055] to [0056], [0072] to [0077] (Family: none) | 8-11 |
| Y | JP 2006-156337 A (Sumitomo Chemical Co., Ltd.), 15 June 2006 (15.06.2006), claims; paragraphs [0051], [0067] to [0069] & US 2006/0021649 A1 & US 2012/0008253 A1 & EP 1624472 A2 & CN 1719619 A | 8-11 |
| Y | JP 2002-319439 A (Catalysts & Chemicals Industries Co., Ltd.), 31 October 2002 (31.10.2002), claims (Family: none) | 10 |
| Y | JP 2008-270042 A (Kabushiki Kaisha KNT Science), 06 November 2008 (06.11.2008), claims (Family: none) | 10 |
| Y | Michael M. Lee, Efficient Hybrid Solar Cells Based on Meso-Superstructured Organometal Halide Perovskites, SCIENCE, 2012.11.02, VOL 338, PAGE 643-647 | 11 |
| A | JP 2009-81046 A (Nissan Chemical Industries, Ltd.), 16 April 2009 (16.04.2009), claims; fig. 1 & US 2009/0078307 A1 | 1-11 |
| A | JP 2013-201044 A (Toshiba Corp.), 03 October 2013 (03.10.2013), claims; fig. 1 (Family: none) | 1-11 |
| A | JP 2013-201071 A (Toshiba Corp.), 03 October 2013 (03.10.2013), claims; fig. 2 (Family: none) | 1-11 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006172758 A
- EP 718288 A
- WO 9518456 A
- WO 2011013760 A


### Non-patent literature cited in the description


- **J. BURSCHKA et al.** *Nature,* vol. 499, 316-319
- *Electrochemistry,* 1997, vol. 65 (11), 923
- *J. Electrochem. Soc.,* 1996, vol. 143 (10), 3099
- *Inorg. Chem.,* 1996, vol. 35, 1168
- *Mano Lett.,* 2008, vol. 8 (7